# EUROPÄISCHE PATENTSCHRIFT

(11) **EP 1 229 985 B1**
(45) Veröffentlichungstag und Bekanntmachung des Hinweises auf die Patenterteilung: **27.08.2003**
(21) Anmeldenummer: 00982953.2
(22) Anmeldetag: 30.09.2000
(51) Int. Cl.: B01D 29/21, B01D 29/96, B01D 35/153, B01D 35/16

(54) **FLÜSSIGKEITSFILTER, INSBESONDERE ÖLFILTER**
LIQUID FILTER, ESPECIALLY AN OIL FILTER
FILTRE POUR LIQUIDE, NOTAMMENT FILTRE A HUILE

(30) Priorität: 23.10.1999 DE 19951085
(43) Veröffentlichungstag der Anmeldung: 14.08.2002
(73) Patentinhaber: MAHLE Filtersysteme GmbH, 70376 Stuttgart (DE)
(72) Erfinder: BAUMANN, Peter, 70565 Stuttgart (DE); BRIEDEN, Thomas, 71336 Waiblingen (DE); GEBERT, Hans, 74080 Heilbronn (DE); MONZIE, Benoît, 70469 Stuttgart (DE); GRASS, Uwe, 70569 Stuttgart (DE)
(74) Vertreter: Bernhard, Uwe
(86) Internationale Anmeldenummer: DE0003509
(87) Internationale Veröffentlichungsnummer: WO01030480

(56) Entgegenhaltungen:
- DE-A- 3 903 675
- DE-A- 3 933 794
- US-A- 5 814 215

## Beschreibung

Die Erfindung betrifft ein Flüssigkeitsfilter, insbesondere Ölfilter zum Reinigen von Schmieröl, insbesondere für Verbrennungsmotoren von Kraftfahrzeugen, mit den Merkmalen des Oberbegriffes des Anspruches 1.

Aus der DE 39 03 675 C2 ist ein Ölfilter dieser Art bekannt, das ein im Einbauzustand im wesentlichen stehend angeordnetes Filtergehäuse aufweist, das einen Aufnahmeraum für einen darin eingesetzten Ringfiltereinsatz zum Filtern des Öles enthält. Das Filtergehäuse ist außerdem mit einem Einlaß für Rohöl ausgestattet, das den Ringfiltereinsatz umströmt. Des weiteren ist ein Auslaß für das gereinigte Öl vorgesehen, der mit einem zentralen Innenbereich des Filtergehäuses verbunden ist und in einem Boden am unteren Ende des Aufnahmeraumes untergebracht ist. Das bekannte Ölfilter ist außerdem mit einem durch Herausnehmen des Ringfiltereinsatzes frei werdenden zusätzlichen Ableitungskanal aus dem Aufnahmeraum ausgestattet, der am Boden des Aufnahmeraumes ausgebildet ist. An einer unteren Endscheibe des Ringfiltereinsatzes ist ein parallel zur Längsachse des Ringfiltereinsatzes und exzentrisch dazu herausragender Zapfen angeformt, der bei in das Filtergehäuse eingesetztem Ringfiltereinsatz dichtend in eine Öffnung des Ableitungskanals eindringt. Ein derartiger Ableitungskanal wird benötigt, um den Aufnahmeraum zum Wechseln des Ringfiltereinsatzes zu entleeren, wodurch eine Verschmutzungsgefahr reduziert wird. Beim Herausnehmen des Ringfiltereinsatzes wird beim bekannten Ölfilter automatisch der Ableitungskanal freigegeben, so daß das im Aufnahmeraum befindliche Öl, zweckmäßigerweise in eine Ölwanne, abfließen kann.

Das bekannte Ölfilter weist Positioniermittel auf, die gewährleisten, daß der Ringfiltereinsatz relativ zum Filtergehäuse beim Einführen des Ringfiltereinsatzes stets so positioniert ist, daß der Zapfen axial in die Öffnung des Ableitungskanals eindringt. Als Positioniermittel dient dabei ein an der Innenwand des Filtergehäuses ausgebildeter, radial nach innen vorstehender und sich axial erstreckender Steg, der in einen am Außenumfang der unteren Endscheibe des Ringfiltereinsatzes eingebrachten radialen Schlitz eingreift. Hierbei besteht das Problem, daß das Einfädeln des Steges in den Radialschlitz eine sorgfältige Handhabung erfordert.

Die vorliegende Erfindung beschäftigt sich mit dem Problem, ein Filter der eingangs genannten Art so auszugestalten, daß sich das Einsetzen des Ringfiltereinsatzes vereinfacht.

Dieses Problem wird erfindungsgemäß durch ein Flüssigkeitsfilter mit den Merkmalen des Anspruches 1 gelöst.

Die Erfindung beruht auf dem allgemeinen Gedanken, am Boden des Aufnahmeraumes eine Einführhilfe anzuordnen, die unabhängig von einer Anfangsrelativlage des Ringfiltereinsatzes bezüglich des Filtergehäuses stets dafür sorgt, daß der Zapfen beim Einschieben des Ringfiltereinsatzes die Öffnung des Ableitungskanal findet. Als Einführhilfe wird hierbei eine Rampe vorgeschlagen, auf die der Zapfen beim axialen Einführen des Ringfiltereinsatzes stets dann auftrifft, wenn der Zapfen nicht mit der Öffnung des Ableitungskanals fluchtet. Die Rampe fällt zur Öffnung des Ableitungskanals hin ab, derart, daß der Zapfen daran entlanggleitend auf die Öffnung trifft, die sich am unteren Ende der Rampe befindet. Damit der Zapfen entlang der Rampe abgleiten kann, ist der Ringfiltereinsatz speziell dafür ausgebildet. Einerseits können sowohl am Zapfen als auch an der Rampe spezielle Kontaktzonen ausgebildet sein, die das Abgleiten ermöglichen. Andererseits ist der Ringfiltereinsatz so ausgebildet, daß er im Aufnahmeraum des Filtergehäuses frei um seine Längsachse drehbar ist.

Entsprechend einer speziellen Ausführungsform kann die Rampe schraubenförmig ausgebildet sein und eine im wesentlichen vollständige Windung besitzen, wobei dann ein oberes Ende der Rampe an die Öffnung des Ableitungskanals angrenzt. Dementsprechend befindet sich an der Öffnung des Ableitungskanals an der einen Seite das untere Ende der Rampe und an der anderen Seite das obere Ende der Rampe, wobei zwischen der Öffnung und dem oberen Ende der Rampe eine geneigte Flanke ausgebildet sein kann. Sofern das Filtergehäuse einen Deckel aufweist, der zum Verschließen des Filtergehäuses darauf aufschraubbar ist, fällt die Rampe im Aufschraubdrehsinn des Deckels zur Öffnung des Ableitungskanals hin ab. Durch diese Maßnahme wird gewährleistet, daß das Aufschrauben des Dekkels das Abgleiten des Zapfens entlang der Rampe unterstützt.

Gemäß einer besonders vorteilhaften Ausführungsform kann zumindest in einem das untere Ende der Rampe enthaltenden Abschnitt der Rampe radial neben der Kontaktzone der Rampe eine Führungskontur ausgebildet sein, die axial zum Aufnahmeraum hin über die Kontaktzone der Rampe vorsteht. Durch diese Maßnahme kann eine radiale Führung für den entlang der Rampe abgleitenden Zapfen realisiert werden, wodurch für den Zapfen das Auffinden der Öffnung des Ableitungskanals vereinfacht wird. Die Gefahr einer radialen Verkantung des Ringfiltereinsatzes im Filtergehäuse beim Einbringen des Ringfiltereinsatzes wird dadurch reduziert. Durch die vorgeschlagenen Führungskonturen kann außerdem ein Ausgleich radialer Herstellungstoleranzen erzielt werden.

Vorzugsweise sind zwei radial gegenüberliegende Führungskonturen vorgesehen, zwischen denen dann die Kontaktzone der Rampe verläuft. Außerdem können diese Führungskonturen an einem von der Öffnung des Ableitungskanals abgewandten Ende jeweils eine Einführungsflanke aufweisen. Die vorgeschlagenen Maßnahmen bewirken eine verbesserte Radialführung des Zapfens.

Gemäß einer vorteilhaften Weiterbildung kann an einem der Rampe zugewandten Ende des Zapfens ein axial vom Zapfen abstehender Vorsprung ausgebildet sein, dessen axial freies Ende die Kontaktzone des Zapfens bildet. Durch diese Maßnahme kann besonders einfach eine Optimierung der miteinander zusammenwirkenden Kontaktzonen erreicht werden, wodurch sich eine besonders geringe Haft- und Gleitreibung zwischen Zapfen und Rampe verwirklichen läßt. Das Abgleiten des Zapfens entlang der Rampe und somit das sichere Einfädeln des Zapfens in die Öffnung des Ableitungskanals wird dadurch verbessert.

Zweckmäßigerweise ist der Vorsprung zumindest in einem axial freien Endbereich in radialer Richtung dünner als der radiale Abstand zwischen zwei radial gegenüberliegenden Führungskonturen, insbesondere ist der Vorsprung in axialer Richtung länger als der axiale Abstand zwischen der Kontaktzone der Rampe und einem oberen Ende der Führungskonturen. Bei dieser Ausgestaltung kann die radiale Führung durch die Führungskonturen durch ein Zusammenwirken mit dem axialen Vorsprung am Zapfen verwirklicht werden, wodurch nur ein reduzierter Raumbedarf für die Rampe erforderlich ist.

Bei einer Weiterbildung der Erfindung kann der Zapfen radial nachgiebig an der Endscheibe angebracht sein. Durch diese Maßnahme können radiale Fertigungstoleranzen bei der Herstellung des Filtergehäuses ausgeglichen werden. Ein Toleranzausgleich in Umfangsrichtung ergibt sich automatisch durch die freie Drehbarkeit des Ringfiltereinsatzes.

Um das Abgleiten des Zapfens entlang der Rampe zu verbessern, kann am axial freien Ende des Zapfens ein sich verjüngender Endabschnitt ausgebildet sein, der die Kontaktzone des Zapfens aufweist. Auf diese Weise kann besonders einfach eine kleine Fläche (im Vergleich zum Zapfenquerschnitt am Beginn des Endabschnitts) als Kontaktzone oder insbesondere auch eine punktartige oder linienartige Kontaktzone geschaffen werden.

Damit der Zapfen beim Abgleiten entlang der Rampe Hindernisse, wie z.B. Ablagerungen, Verschmutzungen, überwinden kann, ist bei einer Weiterbildung der Zapfen an der Endscheibe und/oder der Ringfiltereinsatz am Deckel axial verstellbar gelagert und insbesondere zur Rampe hin federnd vorgespannt.

Bei einer bevorzugten Ausführungsform kann das Filtergehäuse mit einem aufschraubbaren Deckel verschließbar sein, wobei Haltemittel vorgesehen sind, mit denen der Ringfiltereinsatz am Deckel um seine Längsachse drehbar und axial fixiert anbringbar ist. Diese Haltemittel weisen Rasthaken auf, die sich im wesentlichen axial erstrecken und radial nachgiebig federn. Außerdem umfassen die Haltemittel eine radial vorstehende Ringschulter, an der die Rasthaken einrasten, wenn der Ringfiltereinsatz auf den Deckel aufgesteckt ist. Die obere Endscheibe weist dann eine zentrische Öffnung auf, an deren Rand eine Dichtung sowie ein axial abstehender Ringkragen angeordnet sind. Zudem ist am Deckel ein axial abstehender, zentrischer Ring angebracht, der bei auf den Deckel aufgestecktem Ringfiltereinsatz koaxial zum Ringkragen angeordnet ist, wobei die Dichtung radial zwischen Ring und Ringkragen dichtet. Auf diese Weise wird eine besonders preiswerte Steckverbindung zwischen Ringfiltereinsatz und Gehäusedeckel ausgebildet, wobei gleichzeitig eine wirksame Abdichtung zwischen der Außenseite und der Innenseite des Ringfiltereinsatzes erzielt wird.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: einen Längsschnitt durch ein Filtergehäuse,
- Fig. 2: eine teilweise geschnittene Seitenansicht entsprechend einem Pfeil II in Fig. 1,
- Fig. 3: eine perspektivische Ansicht auf einen Boden im Filtergehäuse mit daran angeordneter Rampe entsprechend einer anderen Ausführungsform,
- Fig. 4: eine Draufsicht auf den Boden gemäß Fig. 3 entsprechend einem Pfeil IV in Fig. 3,
- Fig. 5: ein Detailschnitt entsprechend der Schnittlinie V in Fig. 4 mit auf der Rampe abgleitendem Zapfen,
- Fig. 6: eine Ansicht wie in Fig. 4 jedoch einer anderen Ausführungsform,
- Fig. 7: einen Längsschnitt durch einen Abschnitt einer Endscheibe mit daran angebrachten Zapfen einer anderen Ausführungsform,
- Fig. 8: einen Längsschnitt wie in Fig. 7, jedoch einer weiteren Ausführungsform,
- Fig. 9: einen Längsschnitt durch einen Ringfiltereinsatz einer speziellen Ausführungsform,
- Fig. 10: einen Längsschnitt auf einen Teilbereich eines Ringfiltereinsatzes einer anderen Ausführungsform und
- Fig. 11: eine Ansicht wie in Fig.10, jedoch einer weiteren Ausführungsform.

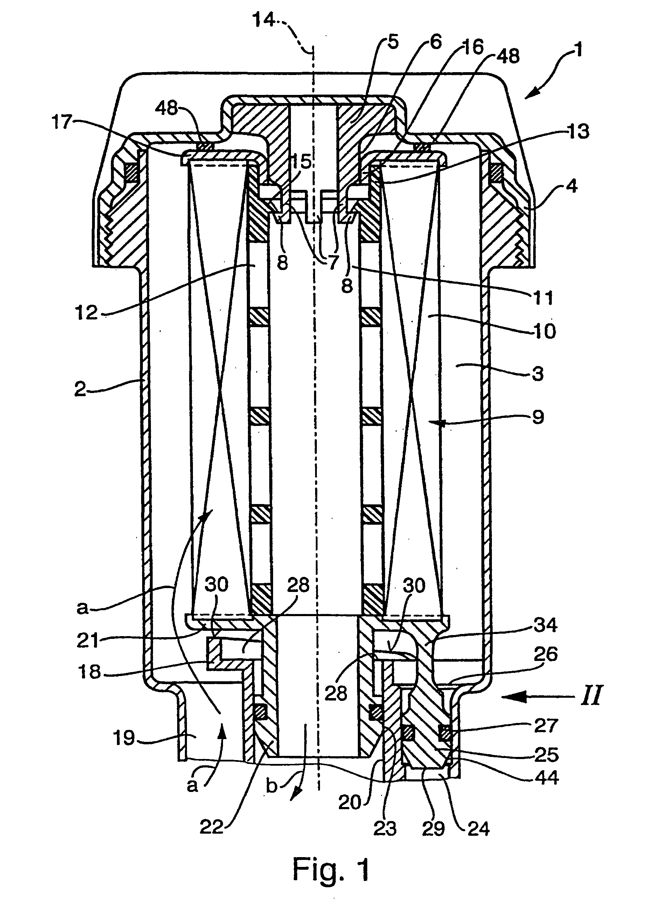

Entsprechend Fig. 1 weist ein erfindungsgemäßes Flüssigkeitsfilter 1 ein im Einbauzustand im wesentlichen stehend montiertes Filtergehäuse 2 auf, das einen Aufnahmeraum 3 enthält. Das Filtergehäuse 2 ist an seiner Oberseite mit einem aufschraubbaren Deckel 4 dicht verschlossen. Auf der Innenseite des Deckels 4 ist eine Halterung 5 angebracht, die einen zentrischen Ring 6 und davon axial abstehende Rasthaken 7 aufweist. Die Rasthaken 7 sind mit einer radial nach außen vorstehenden Rastnase 8 ausgestattet und radial federnd ausgebildet.

In den Aufnahmeraum 3 des Filtergehäuses 2 ist ein Ringfiltereinsatz 9 eingesetzt, der ein ringförmig angeordnetes Filtermaterial 10 besitzt. Der Ringfiltereinsatz 9 weist eine mit radialen Durchbrüchen versehene Innenzarge 12 auf, an der sich das Filtermaterial 10 von außen abstützen kann. Am oberen Ende der Innenzarge 12 ist ein Ringkragen 13 ausgebildet, der sich koaxial zu einer Längsachse 14 des Filtergehäuses 2 bzw. des Ringfiltereinsatzes 9 erstreckt. Axial nach innen an den Ringkragen 13 angrenzend ist an der Innenzarge 12 eine radial nach innen abstehende Ringschulter 15 ausgebildet, die mit den Rasthaken 7 zusammenwirkt. Bei auf den Deckel 4 aufgestecktem Ringfiltereinsatz 9 können die Nasen 8 der Rasthaken 7 an der Ringschulter 15 formschlüssig einrasten. Auf diese Weise ist der Ringfiltereinsatz 9 am Deckel 4 einerseits axial fixiert und andererseits um seine Längsachse frei drehbar gelagert.

Die Positionierungen des Ringes 6 des Deckels 4 und des Ringkragens 13 der Innenzarge 12 sind so gewählt, daß sich bei am Deckel 4 eingerastetem Ringfiltereinsatz 9 der Ring 6 und der Ringkragen 13 in einem axialen Abschnitt radial überlappen. Dabei ist zwischen dem Ring 6 und dem Ringkragen 13 eine Dichtung 16 angeordnet, die sowohl am Ring 6 als auch am Ringkragen 13 anliegt und dichtet. Durch die Dichtung 16 ist am oberen Ende des Ringfiltereinsatzes 9 der Aufnahmeraum 3 gegenüber einem Innenraum 11 des Ringfiltereinsatzes 9 abgedichtet.

Im vorliegenden Ausführungsbeispiel wird die Dichtung 16 durch ein ringförmiges Dichtungselement gebildet, das radial nach innen über eine zentrale axiale Öffnung des Ringfiltereinsatzes 9 vorsteht und beim Aufstecken des Ringfiltereinsatzes 9 auf den Deckel 4 zum Innenraum 11 des Ringfiltereinsatzes 9 hin umgebogen wird. Eine damit einhergehende Komprimierung des Dichtungsmaterials unterstützt die Dichtwirkung. Bei einer bevorzugten Ausführungsform kann eine obere Endscheibe 17 des Ringfiltereinsatzes 9 aus einem Dichtungsmaterial, z.B. Vlies, hergestellt sein und mit dem Filtermaterial 10 durch Plastifizieren verbunden sein. Die Dichtung 16 ist somit einstückig mit der oberen Endscheibe 17 hergestellt.

Am unteren Ende des Filtergehäuses 2 ist der Aufnahmeraum 3 durch einen Boden 18 begrenzt. Im Boden 18 befindet sich ein Einlaß 19 für zu reinigende Rohflüssigkeit, die radial außen in den Aufnahmeraum 3 eindringt und den Ringfiltereinsatz 9 von außen umspült. Die Einströmrichtung ist durch Pfeile a symbolisiert. Im Boden 18 ist zentrisch ein Auslaß 20 angeordnet, der hier die Form einer Stutzenaufnahme aufweist. An einer unteren Endscheibe 21 des Ringfiltereinsatzes 9 ist im Ausführungsbeispiel der Fig. 1 ein koaxialer Stutzen 22 ausgebildet, der in den Auslaß 20 axial hineinragt und mit einer Ringdichtung 23 abgedichtet ist. Durch den Stutzen 22 kommuniziert der Auslaß 20 mit dem Innenraum 11 des Ringfiltereinsatzes 9, so daß durch den Auslaß 20 die gereinigte Flüssigkeit entsprechend einem Pfeil b aus dem Filter 1 abfließen kann.

Im Boden 18 ist außerdem ein zusätzlicher Ableitungskanal 24 angeordnet, der einerseits z.B. mit einer nicht dargestellten Ölwanne und andererseits mit dem Aufnahmeraum 3 kommuniziert. Bei in das Filtergehäuse 2 eingesetztem Ringfiltereinsatz 9 ist der Ableitungskanal 24 durch einen Zapfen 25 verschlossen, der durch eine Öffnung 26 des Ableitungskanals 24 axial in diesen eindringt, wobei entsprechende Dichtungsmittel, hier ein O-Ring 27 zur Abdichtung des Ableitungskanals 24 vorgesehen sind. Der Zapfen 25 ist an der unteren Endscheibe 21 befestigt, bzw. mit dieser einstückig hergestellt. Auf diese Weise wird gewährleistet, daß beim Herausziehen des Ringfiltereinsatzes 9 aus dem Filtergehäuse 2 gleichzeitig bzw. rechtzeitig der Ableitungskanal 24 durch Herausziehen des Zapfens 25 geöffnet wird, so daß sich der Aufnahmeraum 3 entleeren kann.

Am Boden 18 des Aufnahmeraumes 3 ist ein Rampe 28 angebracht, die mit einem unteren Ende an der Öffnung 26 des Ableitungskanals 24 auf der Höhe des Bodens 18 beginnt. Ausgehend von diesem unteren Ende steigt die Rampe 28 mit zunehmender Rampenlänge in das innere des Aufnahmeraumes 3 vorstehend an. Durch die Rampe 28 wird im Inneren des Filtergehäuses 2 eine Einführhilfe für den Zapfen 25 zum Auffinden der Öffnung 26 ausgebildet:

Der Verwender führt den Ringfiltereinsatz 9 in den Aufnahmeraum 3 ein. Sofern nicht zufällig der Zapfen 25 axial zum Ableitungskanal 24 ausgerichtet ist, trifft der Zapfen 25 dabei auf die Rampe 28 und liegt darauf auf. Beim Aufschrauben des Deckels 4 wird dabei vom Deckel 4 eine axial nach unten wirkende Kraft auf den Ringfiltereinsatz 9 übertragen. Da eine der Rampe 28 zugewandte Kontaktzone 29 am Zapfen 25 sowie eine dem Zapfen 25 zugewandte Kontaktzone 30 an der Rampe 28 hinsichtlich ihres Reibungsbeiwertes aufeinander abgestimmt sind, kann der Zapfen 25 durch die nach unten wirkende Axialkraft entlang der Rampe 28 nach unten abgleiten. Am unteren Ende der Rampe 28 findet dann der Zapfen 25 selbsttätig die Öffnung 26 des Ableitungskanals 24.

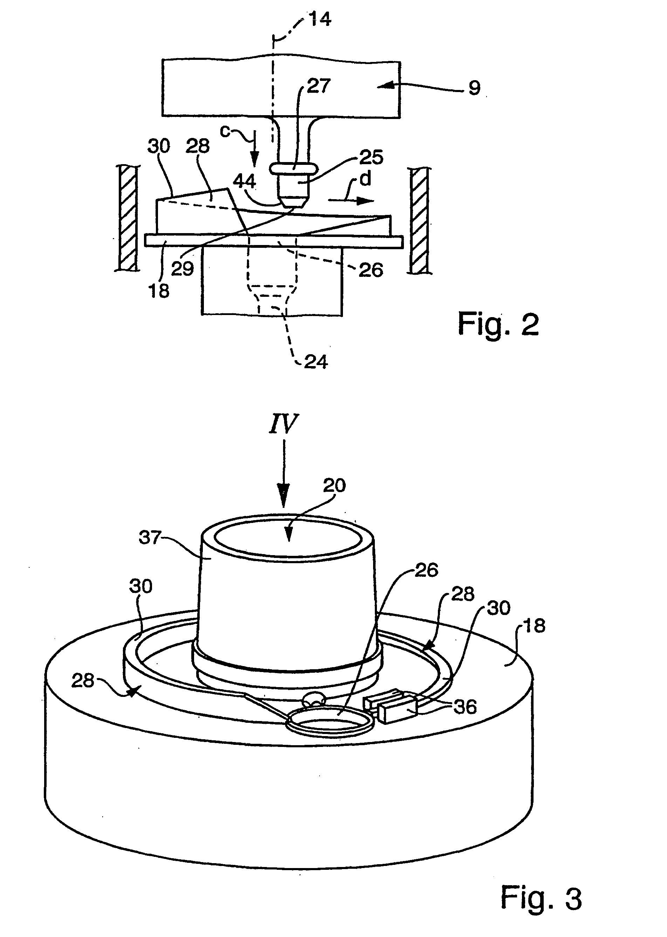

Entsprechend Fig. 2 ist die Rampe 28 beispielsweise in Form einer Schraube mit etwa einer Windung ausgebildet, so daß ein oberes Ende der Rampe 28 sich in der Nähe der Öffnung 26 des Ableitungskanals 24 befindet. Aus Fig. 2 geht auch deutlich hervor, daß die nach unten wirkende Axialkraft, hier durch einen Pfeil c symbolisiert eine Drehung des Ringfiltereinsatzes 9 um seine Längsachse 14 zur Folge hat. Die Rotation des Ringfiltereinsatzes 9 ergibt sich dabei durch den entsprechend dem Pfeil d entlang der Rampe 28 abgleitenden Zapfen 25. Vorzugsweise ist die Rampe 28 so ausgebildet, daß sie in einem Drehsinn, hier im Uhrzeigersinn, zum Boden 18 hin abfällt, der mit dem Drehsinn des Deckels 4 beim Aufschrauben zum Verschließen des Gehäuses 2 übereinstimmt. Auf diese Weise können beim Aufschrauben des Deckels 4 ggf. auf den Ringfiltereinsatz 9 übertragene Momente das Abgleiten des Zapfens 25 entlang der Rampe 28 unterstützen.

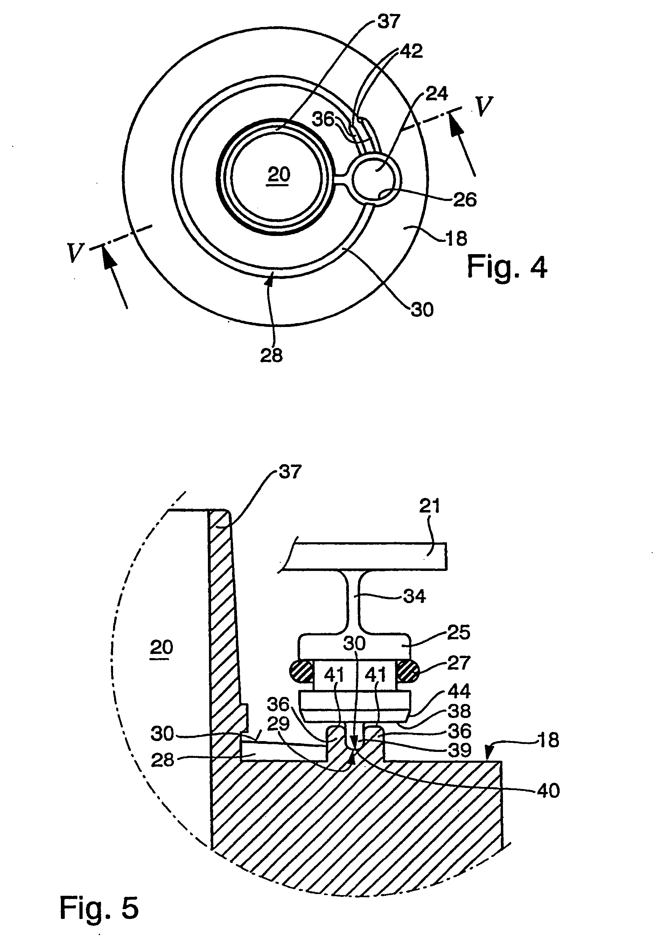

Entsprechend den Fig. 3 bis 6 kann im Bereich des unteren Endes der Rampe 28, das heißt entsprechend Fig. 3 bei dem rechts an die Öffnung 26 des Ableitungskanals 24 angrenzenden Rampenende, radial innen und außen jeweils eine Führungskontur 36 ausgebildet sein, die sich parallel zu der auf der Oberseite der Rampe 28 ausgebildeten Kontaktzone 30 der Rampe 28 und radial daneben erstrecken. Die Führungskonturen 36 bilden eine radiale Seitenführung für den entlang der Rampe 28 abgleitenden Zapfen 25, wobei das Zusammenwirken der Führungskonturen 36 mit dem Zapfen 25 weiter unten zu Fig. 5 näher erläutert wird.

Vorzugsweise sind die Rampe 28 und/oder die Führungskonturen 36 so bemessen, daß die untere Endscheibe 21 bei vollständig aufgeschraubtem Deckel 4 axial auf dem höchsten Punkt der Rampe 28 und/oder auf den Führungskonturen 36 aufliegt.

Bei der Ausführungsform gemäß Fig. 3 ist am Boden 18 außerdem ein axial in den Innenraum 3 vorstehender Stutzen 37 ausgebildet, der den Auslaß 20 mit dem Innenraum 11 eines darauf aufgesetzten Ringfiltereinsatzes 9 verbindet.

Gemäß Fig. 5 ist an einem axial freien, vorausgehenden Ende 38 des Zapfens 25 ein Vorsprung 39 ausgebildet, der in axialer Richtung vom Ende 38 des Zapfens 25 absteht. Der Vorsprung 39 kann in Form einer sich in Umfangsrichtung erstreckenden Rippe oder in Form eines Stiftes ausgebildet sein. Ein axial freies Ende 40 des Vorsprungs 39 bildet die Kontaktzone 29 des Zapfens 25.

Bei den in den Fig. 3 bis 6 wiedergegebenen, speziellen Ausführungsformen ist die radiale Abmessung, das heißt die Dikke des Vorsprunges 39 einerseits kleiner als die radiale Breite der Kontaktzone 30 der Rampe 28 und somit andererseits auch kleiner als der radiale Abstand zwischen den sich radial gegenüberliegenden Führungskonturen 36. Der Vorsprung 39 weist somit radiales Spiel zwischen den Führungskonturen 36 auf. Des weiteren ist die axiale Länge des Vorsprunges 39 größer als der axiale Abstand zwischen der Kontaktzone 30 der Rampe 28 und einem oberen Ende 41 der Führungskonturen 36. Durch diese Dimensionierung wird ein Kontakt des axialen Endes 38 des Zapfens 25 mit dem oberen Ende 41 der Führungskonturen 36 vermieden. Durch die spezielle Anpassung des Zapfens 25 an die Rampe 28 kann das Gleitverhalten des Zapfens 25 entlang der Rampe 28 optimiert werden. Gleichzeitig ergibt sich eine sichere Radialführung des Zapfens 25.

Im Unterschied zu der in Fig. 4 dargestellten Ausführungsform kann die Kontaktzone 30 der Rampe 28 außerhalb der Führungskonturen 36 in radialer Richtung auch eine breitere Abmessung aufweisen, so daß in radialer Richtung größere Toleranzen ausgeglichen werden können.

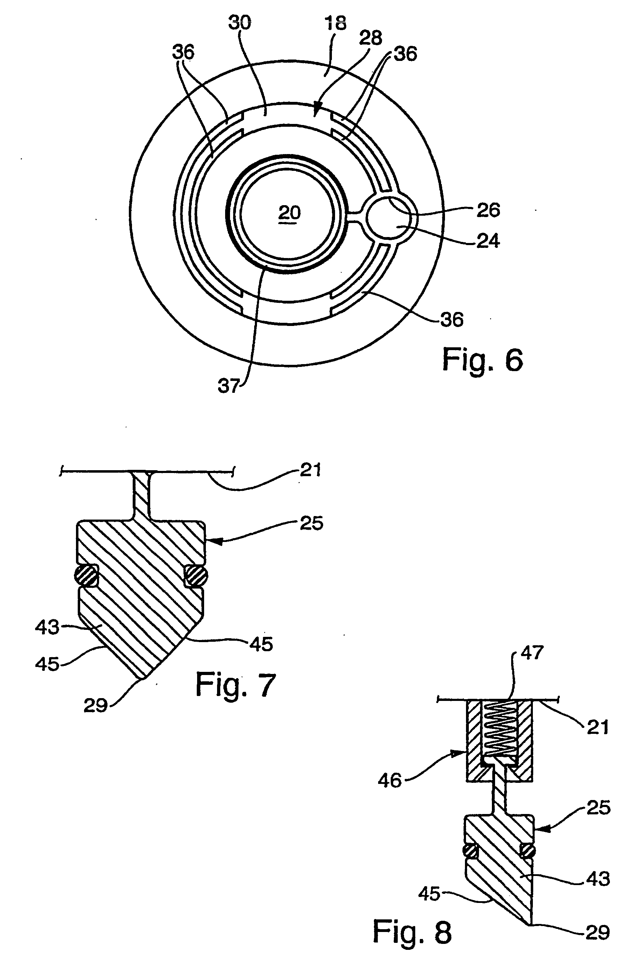

Entsprechend Fig. 6 können mehrere Abschnitte der Rampe 28 radial innen und radial außen mit den Führungskonturen 36 ausgestattet sein. Ebenso ist eine Ausführungsform möglich, bei der sich die Führungskonturen 36 entlang der gesamten Rampenlänge erstrecken.

Die radiale Führung des Zapfens 25 durch das Zusammenwirken der Führungskonturen 36 mit dem Vorsprung 39 wird durch den federelastischen Steg 34 unterstützt.

Bei der Ausführungsform gemäß Fig. 4 sind die von der Öffnung 26 des Ableitkanals 24 abgewandten Enden der Führungskonturen 36 als Einlaufflanken 42 ausgebildet, wodurch sich beim Abgleiten des Zapfens 25 eine radiale Ausrichtung oder Zentrierung bezüglich der Kontaktzone 30 der Rampe 28 ausbildet.

In den Fig. 7 und 8 sind zwei alternative Ausführungsformen für die Ausbildung des Zapfens 25 sowie zusätzlich in Fig. 8 eine alternative Anbindung des Zapfens 25 an die untere Endscheibe 21 wiedergegeben. Bei diesen alternativen Ausführungsformen ist der Zapfen 25 an seinem, von der unteren Endscheibe 21 abgewandten, axial freien Ende mit einem Endabschnitt 43 ausgestattet, der sich zum axialen Ende hin verjüngt. Dieser Endabschnitt 43 weist wenigstens eine abgeschrägte oder abgerundete Flanke 45 auf. Die Länge dieser Flanke 45 sowie die axiale Erstreckung des Endabschnitts 43 sind dabei jeweils größer als der in Richtung des Abstandes zwischen der Flanke 45 und des Zapfens 25 gemessene Durchmesser des Zapfenquerschnitts am axialen Ende des Endabschnitts 43. Dadurch unterscheidet sich der in den Fig. 7 und 8 gezeigte, sich verjüngende Endabschnitt 43 deutlich von einer herkömmlichen Fase 44, die beispielsweise an den Zapfen 25 der in den Fig. 1, 2 und 5 gezeigten Ausführungsformen ausgebildet ist.

Bei der Variante gemäß Fig. 7 ist der Endabschnitt 43 vorzugsweise so ausgebildet, daß er sich zu einer Spitze verjüngt, wodurch die Kontaktzone 29 des Zapfens 25 mit einer relativ kleinen Aufstandsfläche, insbesondere punktartig ausgebildet ist. Ebenso ist eine Ausführungsform möglich, bei der sich der Endabschnitt 43 zu einer Kante verjüngt, die ebenfalls zu einer Kontaktzone 29 mit kleiner Aufstandsfläche, insbesondere zu einer linienartigen Kontaktzone 29 führt. Dabei kann die Ausrichtung der linienartigen Kontaktzone 29 dann zweckmäßig parallel zur Rampenrichtung oder quer dazu verlaufen.

Entsprechendes gilt für die Variante gemäß Fig. 8, bei welcher der Endabschnitt 43 ebenfalls entweder zu einer Spitze oder zu einer Kante zuläuft, um die Kontaktzone 29 des Zapfens 25 zu bilden. Bevorzugt wird hier eine Ausführungsform, bei der sich eine linienartige Kontaktzone 29 ausbildet, die quer zur Rampenrichtung verläuft, daß heißt das kantenartige Ende des Endabschnitts 43 verläuft im wesentlichen radial bezüglich der Längsachse 14 des Filters 1. Der Zapfen 25 ist dann so orientiert, daß diejenige Seite des Zapfens 25, die beim Abgleiten des Zapfens 25 entlang der Rampe 28 vorangeht, mit der abgeschrägten oder abgerundeten Flanke 45 versehen ist.

Bei der in Fig. 8 wiedergegebenen besonderen Ausführungsform ist der Zapfen 25 über eine Halterung 46 an der unteren Endscheibe 21 in axialer Richtung verstellbar gelagert. Die Halterung 46 enthält eine Feder 47, die den Zapfen 25 von der unteren Endscheibe 21 weg, d.h. in Richtung der Rampe 28 vorspannt.

Die speziellen Ausführungsformen der Fig. 7 und 8 sollen es dem Zapfen 25 ermöglichen, ein gegebenenfalls auf der Rampe 28 vorhandenes Hindernis, wie z.B. eine Verschmutzung oder Ablagerung, zu überwinden. An Stelle des an der unteren Endscheibe 21 gelagerten Zapfens 25 kann alternativ auch der komplette Ringfiltereinsatz 9 axial verstellbar am Deckel 5 des Filtergehäuses 2 axial verstellbar gelagert sein. Beispielsweise ist die Kopplung zwischen Ringfiltereinsatz 9 und Deckel 4 bereits bei der Ausführungsform gemäß Fig. 1 so ausgebildet, daß ein axiales Spiel zwischen Ringfiltereinsatz 9 und Deckel 4 vorhanden ist. Um auch hier eine axiale Vorspannung des Zapfens 25 bzw. des Ringfiltereinsatzes 9 in Richtung der Rampe 28 zu erzeugen, können ebenfalls Federmittel 48 vorgesehen sein, die sich einerseits beispielsweise an der oberen Endscheibe 17 und andererseits am Deckel 4 abstützen (vergleiche Fig. 1).

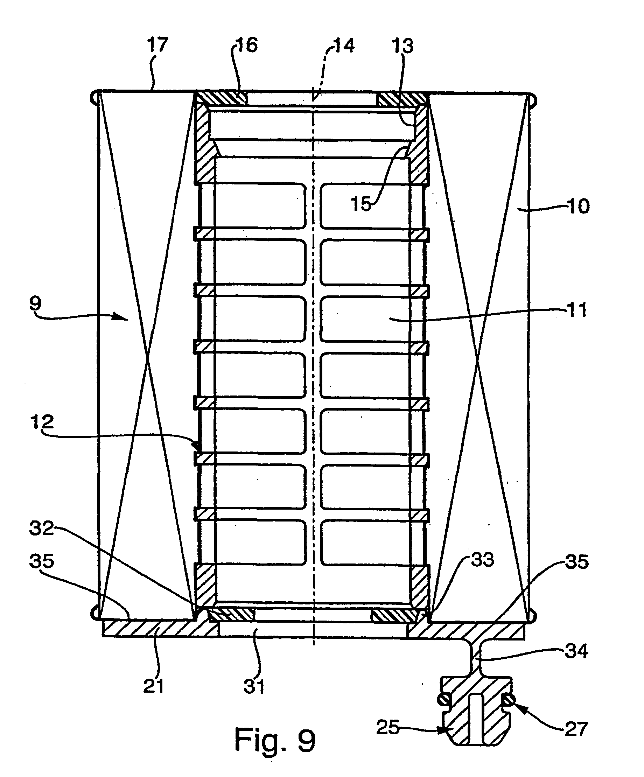

Bei einer bevorzugten Ausführungsform gemäß Fig. 9 ist die obere Endscheibe 17 durch ein Vlies gebildet, das auf das obere axiale Ende des Filtermaterials 10 aufgeschweißt bzw. damit plastifiziert ist. Radial nach innen an das Filtermaterial 10 angrenzend ist das Vliesmaterial unverändert und bildet dort die Dichtung 16, die radial nach innen über eine zentrale Öffnung des Ringfiltereinsatzes 9 vorsteht, solange der Ringfiltereinsatz 9 nicht auf den Deckel 4 aufgesteckt ist. Im Unterschied zu der in Fig. 1 dargestellten Ausführungsform weist die in Fig. 9 wiedergegebene Variante keinen axial nach unten vorstehenden Stutzen 22 auf, sondern ist mit einer zentrischen Öffnung 31 ausgestattet. In diese wird dementsprechend ein vom Boden 18 des Aufnahmeraumes 3 axial abstehender Stutzen (vgl. Stutzen 37 in Fig. 3) eingeführt, um die Verbindung des Innenraumes 11 mit dem Auslaß 20 herzustellen. Auch hier sind entsprechende Dichtungsmittel 32 vorgesehen, die radial wirken. Bei der in Fig. 9 dargestellten Ausführungsform wird zum Anbringen der Dichtung 32 wie bei der oberen Endscheibe 17 eine Vliesscheibe 35 auf das untere axiale Ende des Filtermaterials 10 aufgesetzt und damit plastifiziert. Ein radial nach innen über das Filtermaterial 10 hinausstehender Bestandteil der Vliesscheibe 35 bildet dann die Dichtung 32. Auf diese Vliesscheibe 35 wird dann die untere Endscheibe 21 aufgesetzt, bzw. aufgeschweißt. Durch einen axial nach innen vorstehenden Ringabsatz 33 kann die untere Endscheibe 21 dabei gleichzeitig mit der Innenzarge 12 verbunden werden.

Mit der unteren Endscheibe 21 wird der Zapfen 25 einstückig hergestellt. Um Lagetoleranzen bezüglich der radialen Positionierung des Zapfen 25 sowie bezüglich der radialen Positionierung der Öffnung 26 des Ableitungskanals 24 auszugleichen, ist der Zapfen 25 radial nachgiebig an der unteren Endscheibe 21 angebracht. Diese radiale Nachgiebigkeit wird in den dargestellten Ausführungsformen durch einen Steg 34 erreicht, der radial relativ dünnwandig ausgebildet ist und sich im wesentlichen in Umfangsrichtung des Ringfiltereinsatzes 9 erstreckt. Durch diese Maßnahme ergibt sich eine Flexibilität für den Zapfen 25, die einen Toleranzausgleich in radialer Richtung ermöglicht.

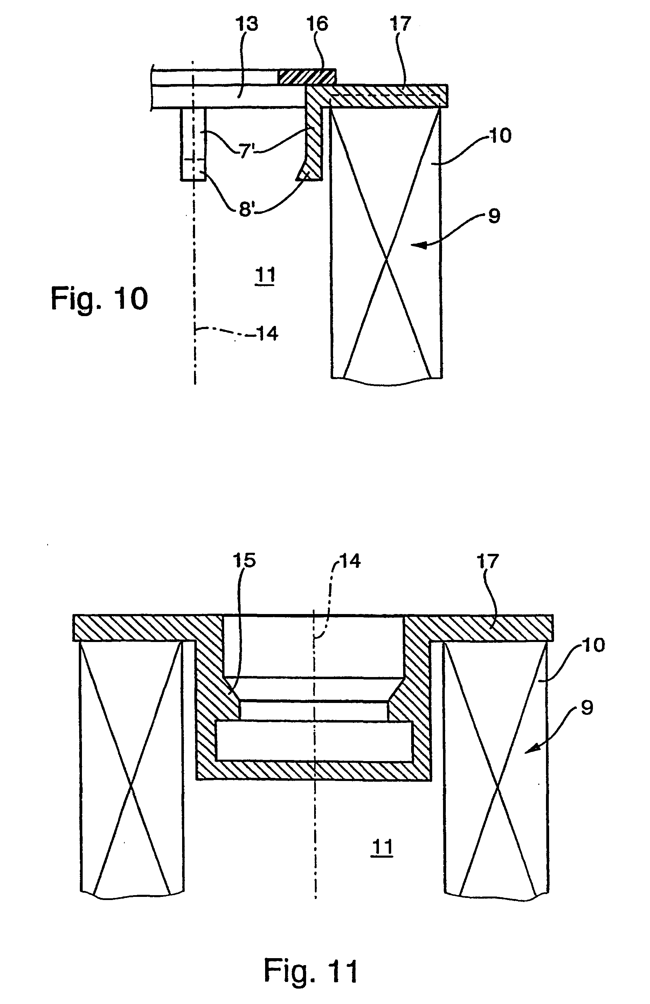

Entsprechend Fig. 10 kann bei einer alternativen Ausführungsform die obere Endscheibe 17 auf konventionelle Weise hergestellt sein, so daß an die obere Endscheibe 17 die Dichtung 16 als separates Bauteil angebracht ist. In der in Fig. 10 dargestellten Ausführungsform sind die Rasthaken 7' mit ihren Rastnasen 8' einstückig mit der oberen Endscheibe 17 ausgebildet, wobei die Rasthaken 7' sich axial in den Innenraum 11 des Ringfiltereinsatzes 9 erstrecken. Der Ringkragen 13 wird hier durch den Innenrand der oberen Endscheibe 17 gebildet. Es ist klar, daß bei einer derartigen Ausführungsform die Halterung 5 des Deckels 4 hülsenförmig ausgestaltet ist und eine radial nach außen vorstehende Ringschulter aufweist, die mit den Rasthaken 7' bzw. deren Rastnasen 8' zusammenwirkt.

Entsprechend Fig. 11 kann die obere Endscheibe 17 auch mit geschlossener Ausführung ausgebildet sein, so daß eine Dichtung entbehrlich ist.

## Patentansprüche

1. Flüssigkeitsfilter, insbesondere Ölfilter zum Reinigen von Schmieröl, insbesondere für Verbrennungsmotoren von Kraftfahrzeugen,
mit einem im Einbauzustand im wesentlichen stehend angeordneten Filtergehäuse (2), das einen Aufnahmeraum (3) für einen darin eingesetzten Ringfiltereinsatz (9) zum Filtern einer Flüssigkeit enthält,
mit einem Einlaß (19) für Rohflüssigkeit,
mit einem Auslaß (20) für gereinigte Flüssigkeit,
mit einem durch Herausnehmen des Ringfilterelements (9) frei werdenden zusätzlichen Ableitungskanal (24) aus dem Aufnahmeraum (3) an einem Boden (18) des Aufnahmeraumes (3),
wobei an eine untere Endscheibe (21) des Ringfilterelements (9) ein parallel zur Längsachse (14) und exzentrisch abstehender Zapfen (25) angeformt ist, der bei in das Filtergehäuse (2) eingesetztem Ringfiltereinsatz (9) dichtend in eine Öffnung (26) des Ableitkanals (24) eindringt,
**dadurch gekennzeichnet,**
**daß** am Boden (18) des Aufnahmeraumes (3) eine Rampe (28) ausgebildet ist, die mit einem unteren Ende an der Öffnung (26) des Ableitkanals (24) am Boden (18) beginnt und mit zunehmender Rampenlänge in das Innere des Aufnahmeraumes (3) vorstehend ansteigt,
**daß** der Ringfiltereinsatz (9) so an das Filtergehäuse (2) angepaßt ist, daß der Ringfiltereinsatz (9) im Aufnahmeraum (3) um seine Längsachse (14) frei drehbar ist, solange der Zapfen (25) nicht in die Öffnung (26) des Ableitkanals (24) eingreift,
**daß** die Rampe (28) und der Zapfen (25) hinsichtlich Positionierung und miteinander zusammenwirkender Kontaktzonen (29, 30) so aufeinander abgestimmt sind, daß beim Einsetzen des Ringfiltereinsatzes (9) in das Filtergehäuse (2) der Zapfen (25) - solange er noch nicht in die Öffnung (26) des Ableitungskanals (24) eingedrungen ist - mit seiner Kontaktzone (29) auf der Kontaktzone (30) der Rampe (28) aufliegt und bei Drehung des Ringfilterelements (9) nach unten abgleitet und am unteren Ende der Rampe (28) in die Öffnung (26) des Ableitungskanals (24) eindringt.

2. Flüssigkeitsfilter nach Anspruch 1,
**dadurch gekennzeichnet,**
**daß** die Rampe (28) schraubenförmig ausgebildet ist.

3. Flüssigkeitsfilter nach Anspruch 2,
**dadurch gekennzeichnet,**
**daß** die schraubenförmige Rampe (28) eine im wesentliche vollständige Windung besitzt, so daß ein oberes Ende der Rampe (28) an die Öffnung (26) des Ableitungskanals (24) angrenzt.

4. Flüssigkeitsfilter nach Anspruch 2 oder 3,
**dadurch gekennzeichnet,**
**daß** das Filtergehäuse (2) einen Deckel (4) aufweist, der zum Verschließen des Filtergehäuses (2) darauf aufschraubbar ist,
**daß** die Rampe (28) im Aufschraubdrehsinn des Deckels (4) zur Öffnung (26) des Ableitungskanals (24) hin abfällt.

5. Flüssigkeitsfilter nach einem der Ansprüche 1 bis 4,
**dadurch gekennzeichnet,**
**daß** zumindest in einem das untere Ende der Rampe (28) enthaltenden Abschnitt der Rampe (28) radial neben der Kontaktzone (30) der Rampe (28) wenigstens eine Führungskontur (36) ausgebildet ist, die axial zum Aufnahmeraum (3) hin über die Kontaktzone (30) der Rampe (28) vorsteht.

6. Flüssigkeitsfilter nach Anspruch 5,
**dadurch gekennzeichnet,**
**daß** zwei radial gegenüberliegende Führungskonturen (36) vorgesehen sind, zwischen denen die Kontaktzone (30) der Rampe (28) verläuft.

7. Flüssigkeitsfilter nach einem der Ansprüche 5 und 6,
**dadurch gekennzeichnet,**
**daß** die Führungskonturen (36) an einem von der Öffnung (26) des Ableitungskanals (24) abgewandten Ende eine Einführflanke (42) aufweisen.

8. Flüssigkeitsfilter nach einem der Ansprüche 5 bis 7,
**dadurch gekennzeichnet,**
**daß** entlang der Rampenlänge mehrere Rampenabschnitte mit einer oder mit zwei parallelen Führungskonturen (36) vorgesehen sind.

9. Flüssigkeitsfilter nach einem der Ansprüche 1 bis 8,
**dadurch gekennzeichnet,**
**daß** an einem der Rampe (28) zugewandten Ende (38) des Zapfens (25) ein axial vom Zapfen (25) abstehender Vorsprung (39) ausgebildet ist, dessen axial freies Ende (40) die Kontaktzone (29) des Zapfens (25) bildet.

10. Flüssigkeitsfilter zumindest nach den Ansprüchen 5 und 9,
**dadurch gekennzeichnet,**
**daß** der Vorsprung (39) in radialer Richtung dünner ist als der radiale Abstand zwischen zwei radial gegenüberliegenden Führungskonturen (36)

11. Flüssigkeitsfilter zumindest nach den Ansprüchen 5 und 9,
**dadurch gekennzeichnet,**
**daß** der Vorsprung (39) in axialer Richtung länger ist als der axiale Abstand zwischen der Kontaktzone (30) der Rampe (28) und einem oberen Ende (41) der Führungskonturen (36).

12. Flüssigkeitsfilter nach einem der Ansprüche 1 bis 11,
**dadurch gekennzeichnet,**
**daß** die Kontaktzone (30) der Rampe (28) in radialer Richtung breiter ist als die Kontaktzone (29) des Zapfens (25).

13. Flüssigkeitsfilter nach einem der Ansprüche 1 bis 12,
**dadurch gekennzeichnet,**
**daß** der Zapfen (25) radial nachgiebig an der unteren Endscheibe (21) angebracht ist.

14. Flüssigkeitsfilter nach einem der Ansprüche 1 bis 13,
**dadurch gekennzeichnet,**
**daß** am axial freien Ende des Zapfens (25) ein sich verjüngernder Endabschnitt (43) ausgebildet ist, der die Kontaktzone (29) des Zapfens (25) aufweist.

15. Flüssigkeitsfilter nach einem der Ansprüche 1 bis 14,
**dadurch gekennzeichnet,**
**daß** die Kontaktzone (29) des Zapfens (25) punktartig oder linienartig ausgebildet ist.

16. Flüssigkeitsfilter nach einem der Ansprüche 1 bis 15,
**dadurch gekennzeichnet,**
**daß** der Zapfen (25) an seinem axial freien Ende auf derjenigen Seite, die beim Abgleiten des Zapfens (25) entlang der Rampe (28) voran geht, eine abgeschrägte oder abgerundete Flanke (45) aufweist.

17. Flüssigkeitsfilter nach einem der Ansprüche 1 bis 16,
**dadurch gekennzeichnet,**
**daß** der Zapfen (25) an der unteren Endscheibe (21) und/oder der Ringfiltereinsatz (9) am Deckel (4) axial verstellbar gelagert ist.

18. Flüssigkeitsfilter nach Anspruch 17,
**dadurch gekennzeichnet,**
**daß** Federmittel (47, 48) vorgesehen sind, die den Zapfen (25) und/oder den Ringfiltereinsatz (9) in Richtung Rampe (28) vorspannen.

19. Flüssigkeitsfilter nach einem der Ansprüche 1 bis 18,
**dadurch gekennzeichnet,**
**daß** das Filtergehäuse (2) mit einem aufschraubbaren Deckel (4) verschließbar ist,
**daß** Haltemittel (5, 7, 8, 15) vorgesehen sind, mit denen der Ringfiltereinsatz (9) am Deckel (4) um seine Längsachse (14) drehbar und axial fixiert anbringbar ist,
**daß** die Haltemittel Rasthaken (7) aufweisen, die sich im wesentlichen axial erstrecken und radial nachgiebig federn,
**daß** die Haltemittel eine radial vorstehende Ringschulter (15) aufweisen, an der die Rasthaken (7) einrasten, wenn der Ringfiltereinsatz (9) auf den Deckel (4) aufgesteckt ist,
**daß** eine obere Endscheibe (17) eine zentrische Öffnung aufweist, an deren Rand eine Dichtung (16) und ein Ringkragen (13) angeordnet sind,
**daß** am Deckel (4) ein zentrischer Ring (6) angebracht ist, der bei auf den Deckel (4) aufgestecktem Ringfiltereinsatz (9) koaxial zum Ringkragen (13) angeordnet ist, wobei die Dichtung (16) radial zwischen Ring (6) und Ringkragen (13) dichtet.

20. Flüssigkeitsfilter nach Anspruch 19,
**dadurch gekennzeichnet,**
**daß** die am Ringfiltereinsatz (9) angeordneten Elemente der Haltemittel axial und radial im Innenraum (11) des Ringfiltereinsatzes (9) ausgebildet sind.

21. Flüssigkeitsfilter nach Anspruch 19 oder 20,
**dadurch gekennzeichnet,**
**daß** die am Ringfiltereinsatz (9) angeordneten Elemente der Haltemittel an einer Innenzarge (12) des Ringfilterelements (9) ausgebildet sind.

22. Flüssigkeitsfilter nach Anspruch 21,
**dadurch gekennzeichnet,**
**daß** die am Ringfiltereinsatz (9) angeordneten Elemente der Haltemittel einstückig mit der Innenzarge (12) hergestellt sind.

23. Flüssigkeitsfilter nach Anspruch 19 oder20,
**dadurch gekennzeichnet,**
**daß** die am Ringfiltereinsatz (9) angeordneten Elemente der Haltemittel an der oberen Endscheibe (17) des Ringfiltereinsatzes (9) ausgebildet sind.

24. Flüssigkeitsfilter nach Anspruch 23,
**dadurch gekennzeichnet,**
**daß** die am Ringfiltereinsatz (9) angeordneten Elemente der Haltemittel einstückig mit der oberen Endscheibe (17) hergestellt sind.

25. Ringfiltereinsatz für ein Flüssigkeitsfilter nach einem der Ansprüche 9 bis 11 und 13 bis 18.

## Claims

1. A liquid filter, especially an oil filter, for cleaning lubricating oil, especially for internal combustion engines in motor vehicles,
having a filter housing (2) which is arranged essentially upright in the installed state and includes a receiving area (3) for a ring-shaped filter insert (9) inserted into it for filtering a liquid,
having an inlet (19) for unclean liquid,
having an outlet (20) for cleaned liquid,
having an additional discharge channel (24) which is released by removal of the ring-shaped filter insert (9) and leads out of the receiving area (3) on a bottom (18) of the receiving area (3),
whereby a pin (25) that projects eccentrically and runs parallel to the longitudinal axis (14) is integrally molded on a lower end disk (21) of the ring-shaped filter element (9) and penetrates into an opening (26) in the discharge channel (24) and seals it when the ring-shaped filter insert (9) is inserted into the filter housing (2),
**characterized in that**
a ramp (28) is formed on the bottom (18) of the receiving area (3), beginning with a lower end at the opening (26) in the discharge channel (24) in the bottom (18) and rising into the interior space of the receiving area (3) with an increase in the ramp length,
the ring-shaped filter insert (9) is adapted to the filter housing (2) so that the ring-shaped filter insert (9) can rotate freely about its longitudinal axis (14) in the receiving area (3) as long as the pin (25) does not engage in the opening (26) in the discharge channel (24),
the ramp (28) and the pin (25) are coordinated with regard to positioning and interacting contact zones (29, 30) so that when the ring-shaped filter insert (9) is inserted into the filter housing (2), the pin (25) rests with its contact zone (29) on the contact zone (30) of the ramp (28) - as long as the pin has not yet penetrated into the opening (26) in the discharge channel (24) - and it slides downward with the rotation of the ring-shaped filter insert (9), penetrating into the opening (26) in the discharge channel (24) at the lower end of the ramp (28).

2. A liquid filter according to claim 1, **characterized in that** the ramp (28) is designed with a helical pattern.

3. A liquid filter according to claim 2, **characterized in that** the helical ramp (28) has an essentially complete turn, so an upper end of the ramp (28) is adjacent to the opening (26) in the discharge channel (24).

4. A liquid filter according to claim 2 or 3,
**characterized in that** the filter housing (2) has a cover (4) which can be screwed onto the filter housing (2) to seal it,
the ramp (28) drops toward the opening (26) in the discharge channel (24) in the direction of screwing on the cover (4).

5. A liquid filter according to one of claims 1 through 4, **characterized in that** at least one guide contour (36) is formed in at least one section of the ramp (28) containing the lower end of the ramp (28) and located radially next to the contact zone (30) of the ramp (28), and this guide contour projects axially beyond the contact zone (30) of the ramp (28) toward the receiving area (3).

6. A liquid filter according to claim 5, **characterized in that** two radially opposite guide contours (36) are provided, with the contact zone (30) of the ramp (28) running between them.

7. A liquid filter according to one of claims 5 and 6, **characterized in that** the guide contours (36) have an insertion flank (42) on one end facing away from the opening (26) in the discharge channel (24).

8. A liquid filter according to one of claims 5 through 7, **characterized in that** several ramp sections having one or two parallel guide contours (36) are provided along the length of the ramp.

9. A liquid filter according to one of claims 1 through 8, **characterized in that** a projection (39) extending axially away from the pin (25) is formed on an end (38) of the pin (25) facing the ramp (28), its axially free end (40) forming the contact zone (29) of the pin (25).

10. A liquid filter according to at least claims 5 and 9, **characterized in that** the projection (39) is thinner in the radial direction than the radial distance between two radially opposed guide contours (36).

11. A liquid filter at least according to claims 5 and 9, **characterized in that** the projection (39) is longer in the axial direction than the axial distance between the contact zone (30) of the ramp (28) and an upper end (41) of the guide contours (36).

12. A liquid filter according to one of claims 1 through 11, **characterized in that** the contact zone (30) of the ramp (28) is wider in the radial direction than the contact zone (29) of the pin (25).

13. A liquid filter according to one of claims 1 through 12, **characterized in that** the pin (25) is mounted on the lower end disk (21) in a radially flexible manner.

14. A liquid filter according to one of claims 1 through 13, **characterized in that** a tapering end section (43) formed on the axially free end of the pin (25) has the contact zone (29) of the pin (25).

15. A liquid filter according to one of claims 1 through 14, **characterized in that** the contact zone (29) of the pin (25) is designed as a spot or a line.

16. A liquid filter according to one of claims 1 through 15, **characterized in that** the pin (25) has a rounded or inclined flank (45) on its axially free end on the side which leads when the pin (25) slides along the ramp (28).

17. A liquid filter according to one of claims 1 through 16, **characterized in that** the pin (25) is mounted so it is axially adjustable on the lower end disk (21) and/or the ring-shaped filter insert (9) is axially adjustable on the cover (4).

18. A liquid filter according to claim 17, **characterized in that** spring means (47, 48) are provided which apply tension to the pin (25) and/or the ring-shaped filter insert (9) in the direction of the ramp (28).

19. A liquid filter according to one of claims 1 through 18, **characterized in that** the filter housing (2) can be sealed with a screw-on cover (4),
retaining means (5, 7, 8, 15) are provided with which the ring-shaped filter insert (9) can be mounted on the cover (4) so it can rotate about its longitudinal axis (14) and is secured axially,
the retaining means have catch hooks (7) which extend essentially axially and have a radial flexibility,
the retaining means have a radially projecting ring-shaped shoulder (15) on which the catch hooks (7) engage when the ring-shaped filter insert (9) is placed on the cover (4),
an upper end disk (17) has a central orifice on whose edge are arranged a gasket (16) and a ring-shaped collar (13),
a central ring (6) mounted on the cover (4) is arranged coaxially with the ring-shaped collar (13) when the ring-shaped filter insert (9) is placed on the cover (4), and the gasket (16) forms a seal radially between the ring (6) and the ring-shaped collar (13).

20. A liquid filter according to claim 19, **characterized in that** the elements of the retaining means arranged on the ring-shaped filter insert (9) are designed axially and radially in the interior space (11) of the ring-shaped filter insert (9).

21. A liquid filter according to claim 19 or 20,
**characterized in that** the elements of the retaining means arranged on the ring-shaped filter insert (9) are designed on an inner frame (12) of the ring-shaped filter insert (9).

22. A liquid filter according to claim 21, **characterized in that** the elements of the retaining means arranged on the ring-shaped filter insert (9) are manufactured in one piece with the inner frame (12).

23. A liquid filter according to claim 19 or 20,
**characterized in that** the elements of the retaining means arranged on the ring-shaped filter insert (9) are formed on the upper end disk (17) of the ring-shaped filter insert (9).

24. A liquid filter according to claim 23, **characterized in that** the elements of the retaining means arranged on the ring-shaped filter insert (9) are manufactured in one piece with the upper end disk (17).

25. A ring-shaped filter insert for a liquid filter according to one of Claims 9 through 11 and 13 through 18.

## Revendications

1. Filtre pour liquide, en particulier filtre à huile pour purifier de l'huile lubrifiante, en particulier pour des moteurs à combustion interne de véhicules,
présentant un carter de filtre (2) disposé essentiellement debout à l'état monté, qui comprend un espace formant logement (3) pour une cartouche filtrante annulaire (9) insérée à l'intérieur, destinée à filtrer un liquide,
présentant une entrée (19) pour liquide brut,
présentant une sortie (20) pour liquide purifié,
présentant, sur un fond (18) de l'espace formant logement (3), un canal d'évacuation (24)
supplémentaire devenant libre par retrait de l'élément filtrant annulaire (9) hors de l'espace formant logement (3),
un bouchon (25) parallèle à l'axe longitudinal (14) et saillant de manière excentrique étant formé sur un disque d'extrémité inférieur (21) de l'élément filtrant annulaire (9) qui, lorsque l'élément filtrant annulaire (9) est inséré dans le carter de filtre (2) pénètre de façon assurant l'étanchéité dans une ouverture (26) du canal d'évacuation (24),
**caractérisé en ce**
**que** sur le fond (18) de l'espace formant logement (3) est formée une rampe (28), qui débute par une extrémité inférieure à l'ouverture (26) du canal d'évacuation (24) sur le fond (18) et qui s'élève dans l'intérieur de l'espace formant logement (3) au fur et à mesure que la longueur de la rampe augmente,
**que** l'élément filtrant annulaire (9) est adapté au carter de filtre (2) de telle façon que l'élément filtrant annulaire (9) dans l'espace formant logement (3) est libre en rotation autour de son axe (14), tant que le bouchon (25) ne vient pas en prise pas dans l'ouverture (26) du canal d'évacuation (24),
**que** la rampe (28) et le bouchon (25) en matière de positionnement et de zones de contact (29, 30) coopérant l'une avec l'autre, sont adaptés l'un à l'autre de telle façon que, lors de l'insertion de l'élément filtrant annulaire (9) dans le carter de filtre (2), le bouchon (25) - tant qu'il n'a pas pénétré dans l'ouverture (26) du canal d'évacuation (24) - repose par sa zone de contact (29) sur la zone de contact (30) de la rampe (28) et glisse vers le bas lors de la rotation de l'élément filtrant annulaire (9) et, à l'extrémité inférieure de la rampe (28), pénètre dans l'ouverture (26) du canal d'évacuation (24).

2. Filtre pour liquide selon la revendication 1,
**caractérisé en ce,**
la rampe (28) est réalisée hélicoïdale.

3. Filtre pour liquide selon la revendication 2,
**caractérisé en ce**
**que** la rampe hélicoïdale (28) possède une spire essentiellement complète, de sorte qu'une extrémité supérieure de la rampe (28) est limitrophe de l'ouverture (26) du canal d'évacuation (24).

4. Filtre pour liquide selon la revendication 2 ou 3,
**caractérisé en ce**
**que** le carter de filtre (2) présente un couvercle (4) qui pour fermer le carter de filtre (2) peut être vissé dessus,
**que** la rampe (28) descend dans le sens du vissage du couvercle (4) en direction de l'ouverture (26) du canal d'évacuation (24).

5. Filtre pour liquide selon l'une des revendications 1 à 4,
**caractérisé en ce**
**qu'**au moins dans une section de la rampe (28) contenant l'extrémité inférieure de la rampe (28) est formé dans le sens radial à côté de la zone de contact (30) de la rampe (28) au moins un contour de guidage (36) qui, axialement en direction de l'espace formant logement (3), fait saillie au-dessus de la zone de contact (30) de la rampe (28).

6. Filtre pour liquide selon la revendication 5,
**caractérisé en ce**
**que** deux contours de guidage (36) en regard l'un de l'autre dans le sens radial sont prévus, entre lesquels s'étend la zone de contact (30) de la rampe (28).

7. Filtre pour liquide selon l'une des revendications 5 et 6,
**caractérisé en ce**
**qu'**à une extrémité éloignée de l'ouverture (26) du canal d'évacuation (24), les contours de guidage (36) présentent un flanc d'engagement (42).

8. Filtre pour liquide selon l'une des revendications 5 à 7,
**caractérisé en ce**
**que** le long de la longueur de rampe sont prévues plusieurs sections de rampe présentant un ou deux contours de guidage (36) parallèles.

9. Filtre pour liquide selon l'une des revendications 1 à 8,
**caractérisé en ce**
**qu'**à une extrémité (38) du bouchon (25) orientée vers la rampe (28) est formé, faisant saillie axialement du bouchon (25), un téton (39) dont l'extrémité libre dans le sens axial (40) forme la zone de contact (29) du bouchon (25).

10. Filtre pour liquide selon l'une des revendications 5 ou 9,
**caractérisé en ce**
**que**, dans le sens radial, le téton (39) est plus fin que l'écartement radial entre deux contours de guidage (36) en regard l'un de l'autre radialement.

11. Filtre pour liquide selon l'une des revendications 5 ou 9,
**caractérisé en ce**
**que**, dans le sens axial, le téton (39) est plus long que l'écartement axial entre la zone de contact (30) de la rampe (28) et une extrémité supérieure (41) des contours de guidage (36).

12. Filtre pour liquide selon l'une des revendications 1 à 11,
**caractérisé en ce**
**que**, dans le sens radial, la zone de contact (30) de la rampe (28) est plus large que la zone de contact (29) du bouchon (25).

13. Filtre pour liquide selon l'une des revendications 1 à 12,
**caractérisé en ce**
**que** le bouchon (25) est monté flexible dans le sens radial sur le disque d'extrémité inférieur (21).

14. Filtre pour liquide selon l'une des revendications 1 à 13,
**caractérisé en ce**
**qu'**à l'extrémité axialement libre du bouchon (25) est formée une section d'extrémité (43) se rétrécissant, qui présente la zone de contact (29) du bouchon (25).

15. Filtre pour liquide selon l'une des revendications 1 à 14,
**caractérisé en ce**
**que** la zone de contact (29) du bouchon (25) est réalisée sous forme de point ou de ligne.

16. Filtre pour liquide selon l'une des revendications 1 à 15,
**caractérisé en ce**
**qu'**à son extrémité libre dans le sens axial, le bouchon (25) présente sur le côté qui lors du glissement du bouchon (25) avance le long de la rampe (28), un flanc (45) chanfreiné ou arrondi.

17. Filtre pour liquide selon l'une des revendications 1 à 16,
**caractérisé en ce**
**que** le bouchon (25) sur le disque d'extrémité inférieur (21) et/ou l'élément filtrant annulaire (9) sur le couvercle (4) est supporté réglable dans le sens axial.

18. Filtre pour liquide selon la revendication 17,
**caractérisé en ce**
**que** des moyens élastiques (47, 48) sont prévus, qui précontraignent le bouchon (25) et/ou l'élément filtrant annulaire (9) en direction de la rampe (28).

19. Filtre pour liquide selon l'une des revendications 1 à 18,
**caractérisé en ce**
**que** le carter de filtre (2) peut être fermé par un couvercle (4) vissable dessus,
**que** des moyens de fixation (5, 7, 8, 15) sont prévus, par lesquels l'élément filtrant annulaire (9) peut être monté sur le couvercle (4) de manière rotative autour de son axe longitudinal (14) et fixé axialement,
**que** les moyens de fixation présentent des crochets d'encliquetage (7), qui s'étendent essentiellement dans le sens axial et sont élastiques dans le sens radial,
**que** les moyens de fixation présentent un épaulement annulaire (15) saillant dans le sens radial, sur lequel les crochets d'encliquetage (7) viennent s'encliqueter lorsque l'élément filtrant annulaire (9) est mis en place sur le couvercle (4),
**qu'**un disque d'extrémité supérieur (17) présente une ouverture centrée, au bord de laquelle un joint d'étanchéité (16) est disposé autour d'une collerette annulaire (13),
**que** sur le couvercle (4) est montée une bague centrée (6) qui, lorsque l'élément filtrant annulaire (9) est mis en place sur le couvercle (4), est disposée coaxialement par rapport à la collerette annulaire (13), le joint d'étanchéité (16) assurant l'étanchéité radialement entre la bague et la collerette annulaire (13).

20. Filtre pour liquide selon la revendication 19,
**caractérisé en ce**
**que** les éléments des moyens de fixation disposés sur l'élément filtrant annulaire (9) sont réalisés axialement et radialement dans l'espace intérieur (11) de l'élément filtrant annulaire (9).

21. Filtre pour liquide selon la revendication 19 ou 20,
**caractérisé en ce**
**que** les éléments des moyens de fixation disposés sur l'élément filtrant annulaire (9) sont réalisés sur une structure intérieure (12) de l'élément filtrant annulaire (9).

22. Filtre pour liquide selon la revendication 21,
**caractérisé en ce**
**que** les éléments des moyens de fixation disposés sur l'élément filtrant annulaire (9) sont réalisés d'un seul tenant avec la structure intérieure (12).

23. Filtre pour liquide selon la revendication 19 ou 20,
**caractérisé en ce**
**que** les éléments des moyens de fixation disposés sur le l'élément filtrant annulaire (9) sont réalisés sur le disque d'extrémité supérieur (17) de l'élément filtrant annulaire (9).

24. Filtre pour liquide selon la revendication 23,
**caractérisé en ce**
**que** les éléments des moyens de fixation, disposés sur l'élément filtrant annulaire (9) sont réalisés d'un seul tenant avec le disque d'extrémité supérieur (17).

25. Cartouche filtrant annulaire pour un filtre pour liquide selon l'une des revendications 9 à 11 et 13 à 18.
